# EUROPÄISCHE PATENTSCHRIFT

(11) **EP 0 995 670 B1**
(45) Veröffentlichungstag und Bekanntmachung des Hinweises auf die Patenterteilung: **22.12.2004**
(21) Anmeldenummer: 99115741.3
(22) Anmeldetag: 10.08.1999
(51) Int. Cl.: B62D 65/00, B62D 25/20, B62D 27/06, B62D 27/04, F16B 5/02

(54) **Vorrichtung für Fahrzeuge zur justierbaren Befestigung von Einbauteilen**
Method in vehicles for the adjustable fastening of parts
Procedé pour véhicule pour la fixation réglable des éléments

(30) Priorität: 22.10.1998 DE 19848739
(43) Veröffentlichungstag der Anmeldung: 26.04.2000
(73) Patentinhaber: Rheinmetall Landsysteme GmbH, 24159 Kiel (DE)
(72) Erfinder: Kühl, Manfred, 24229 Schwedeneck (DE); Reker, Alfred, 24159 Kiel (DE)
(74) Vertreter: Hansmann, Dierk, Dipl.-Ing.

(56) Entgegenhaltungen:
- DE-A- 3 405 000
- DE-C- 4 426 785
- DE-C- 19 546 703
- DE-U- 9 217 488

## Beschreibung

Die Erfindung betrifft eine Vorrichtung für Panzerfahrzeuge zur justierbaren Befestigung von Einbauteilen an einer Bodenplatte des Fahrzeuges als Aufnahmeplatte, über räumlich verteilt angeordnete verbindungsstellen, wobei die Aufnahmeplatte mit Anschlußelementen versehen ist, an denen Verbindungselemente zur Aufnahme der Einbauteile in der Höhe justierbar gehaltert sind

Bei der Endmontage von Panzerfahrzeugen wird häufig das Fahrzeuggehäuse, speziell der Gehäuseboden, durch einzelne Montageschritte, beispielsweise das Anbringen von Fahrwerkteilen, so stark verformt, daß Einbauteile, die zuvor hochgenau hergestellt wurden und die auch entsprechend hochgenau und parallel im Abstand vom Gehäuseboden im Fahrzeuginnenraum montiert werden müssen, nach der Endmontage nicht mehr den vorgegebenen Toleranzangaben gemäß zueinander passen. Die Ursache hierfür ist darin zu suchen, daß bei der Herstellung dieser Einbauteile, beispielsweise Platten oder sonstigen Einbauten, zunächst keine Belastung auf diese einwirkt. Erst bei der Endmontage dieser Einbauteile kann es zu mechanischen Belastungen der Gesamtanordnung kommen, die zwar in dem durch den Elastizitätsmodul des verwendeten Werkstoffs zulässigen Rahmen bleiben, die aber derart verformend wirken, daß die im Rohgehäuse anfangs gewährleistete Ebenheit der von den verbindungsstellen gebildeten Aufnahmepunkte für diese Einbauteile nach der Fahrzeugmontage nicht mehr gegeben ist.

Da die Bodenplatte eines Fahrzeuggehäuses insbesondere aus Gewichtsgründen of nicht massiver und steifer ausgebildet werden kann, muß die geforderte Ebenheit der Aufnahmepunkte für derartige Einbauten durch aufwendige manuelle Nacharbeit wiederhergestellt werden. Als besonders nachteilig erweist sich dabei, daß der Fahrzeuginnenraum für Bearbeitungsmaschinen teilweise schlecht zugänglich ist, so daß für diese Arbeiten aufwendige Sonderwerkzeuge benutzt werden müssen.

Aus der DE 92 17 488 U ist eine Schraubenverbindung bekannt geworden, die zum Ausgleich von Toleranzen den gegenseitigen Abstand der miteinander zu verbindenden Teile verändert, wobei eine Distanzhülse aus einem Innenteil und einen darauf aufgeschobenen durch eine Ratschenverbindung relativ zum Innenteil kraftschlüssig fixierten Außenteil besteht.

Es ist aus der DE 195 46 703 C eine Befestigung für plattenförmige Bauteile bekannt, die von beiden Seiten einstellbar ist. Hierzu wird ein Befestigungselement aus zwei Befestigungsgruppen gebildet, die jeweils eines der plattenförmigen Bauelemente halten und eine gemeinsame Gewindeverbindung beide Befestigungsgruppen durchdringt. Die Gewindeverbindung ist dabei an einer der beiden Befestigungsgruppen festlegbar. Hierbei ist es schwierig, auf Dauer eine justierte Aufnahmefläche durch die Befestigungselemente zu schaffen.

Aufgabe der Erfindung ist es, eine Vorrichtung zur justierbaren Befestigung zu schaffen, die eine Wiederherstellung der geforderten Ebenheit der Aufnahmepunkte durch einfache Maßnahmen sicher ermöglicht und damit die Fertigung wesentlich vereinfacht sowie den Fertigungsaufwand deutlich verringert.

Zur Lösung dieser Aufgabe wird erfindungsgemäß eine Vorrichtung mit den Merkmalen des Anspruches 1 vorgeschlagen.

Bei einer derartigen Vorrichtung wird eine Reihe derartiger Anschlußelemente an den als Befestigungspunkten vorgesehenen Stellen der Fahrzeugbodenplatte angebracht. Diese Anschlußelemente besitzen jeweils eine zentrische zylindrische Ausdrehung, in die ein mit einem entsprechend geformten zylindrischen Zapfen versehenes Verbindungselement eingesetzt und mittels Schrauben befestigt wird. Durch das Einbringen von Ausgleichscheiben zwischen diese beiden Bauteilen wird die Oberfläche des jeweiligen Verbindungselementes auf ein vorgegebenes Höhenmaß, bezogen auf eine bearbeitete Referenzfläche des Gehäusebodens, eingestellt und das Einbauteil wird am Verbindungselement befestigt.

Das Anschlußelement wird entweder unmittelbar am Fahrzeugboden angeschweißt, oder es wird eine zusätzliche Halterung in Form eines mit einem Innengewinde versehenen Rohrstutzens vorgesehen, der seinerseits am Fahrzeugboden angeschweißt ist. In diesen Rohrstutzen wird das mit einem Außengewinde versehene zylindrische Anschlußelement eingeschraubt und nach Einstellung der geforderten Höhe festgeschweißt.

Mit der Vorrichtung nach der Erfindung ist es möglich, mit relativ einfachen Bearbeitungsgeräten, wie Bohrschablone und Bohrmaschine, die portabel und im Fahrzeuginnenraum einsetzbar sind, die erforderliche genaue Ausrichtung der Befestigungspunkte in bezug auf die Referenzfläche bei der Endmontage auch dann sicherzustellen, wenn das Fahrzeuggehäuse infolge einer voraufgegangenen mechanischen Beanspruchung verformt wurde.

Weiterbildungen der Erfindung sind durch die Merkmale der Unteransprüche gekennzeichnet.

Nachfolgend wird die Erfindung anhand eines in der Zeichnung schematisch dargestellten Ausführungsbeispieles näher erläutert werden. Es zeigen:
- Fig. 1: eine Prinzipdarstellung einer Gesamtanordnung,
- Fig. 2: eine Detaildarstellung eines Befestigungspunktes und
- Fig. 3: eine Detaildarstellung einer alternativen Ausbildung eines Befestigungspunktes.

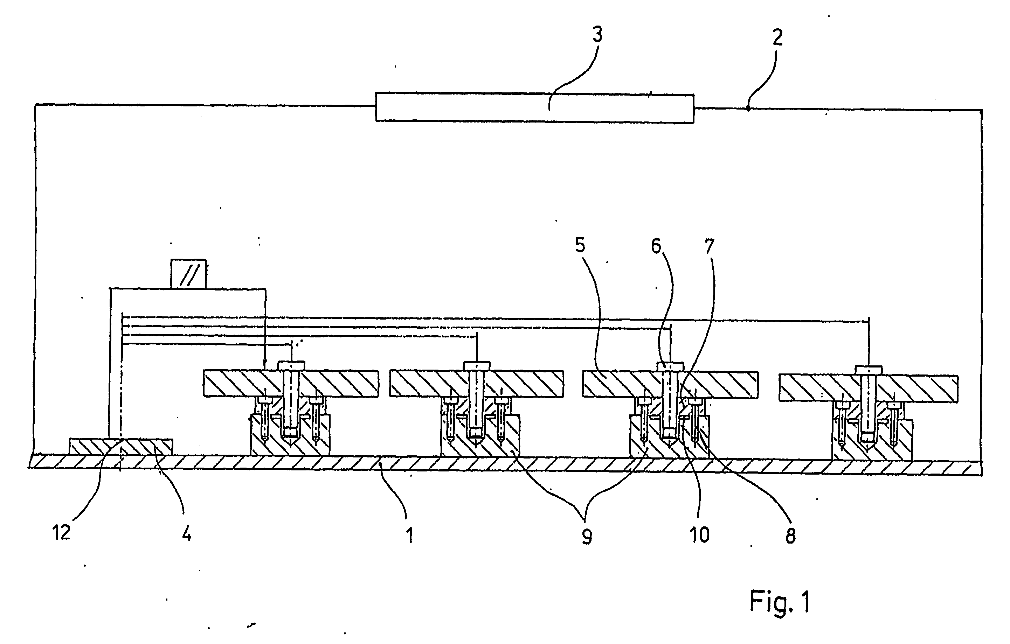

Die Darstellung in Fig. 1 zeigt einen vertikalen Schnitt durch einen geschlossenen Fahrzeuginnenraum, der von einer Bodenplatte 1 und einem auf dieser angeordneten Gehäuse 2 gebildet wird. Eine Einstiegsöffnung 3 im Gehäuse 2 ermöglicht den Zugang zum Fahrzeuginnenraum zum Zwecke der Montage und Bearbeitung. Die Bodenplatte 1 ist mit einer bearbeiteten Referenzfläche 4 versehen, zu der nachträglich einzubauende Platten 5 sowohl im Höhenabstand als auch parallel in bezug auf die Bodenplatte 1, wie durch entsprechende Maßlinien in Fig. 1 angedeutet, exakt ausgerichtet sein müssen.

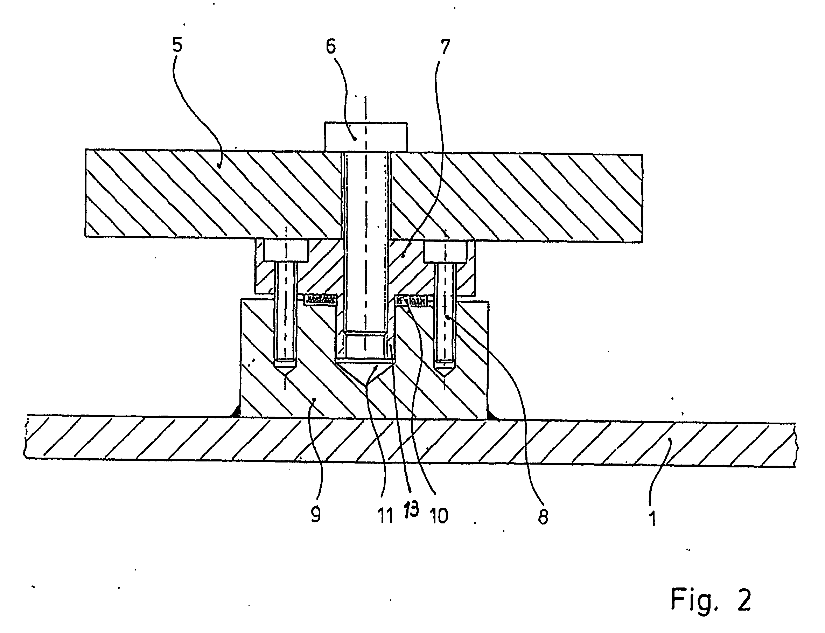

Gemäß der Detaildarstellung in Fig. 2 werden die Einbauplatten 5 mittels Schrauben 6 und entsprechenden Gewindebohrungen an zylindrischen Verbindungselementen 7, die als Aufnahmeteller ausgebildet sind, befestigt. Die Aufnahmeteller 7 sind ihrerseits über Schrauben 8 an ebenfalls zylindrischen Anschlußelementen 9 gehaltert, die im Fall des hier dargestellten Ausführungsbeispiels auf der Bodenplatte 1 festgeschweißt sind. Eine zylindrische Ausdrehung in der Oberfläche jedes Anschlußelementes 9 dient zur Aufnahme von Ausgleichsscheiben 10, die für eine Justierung der Höhe der Einbauplatte 5 zwischen dem Anschlußelement 9 und dem darüber befindlichen Aufnahmeteller 7 eingelegt werden können.

Das Anschlußelement 9 ist mit einer Zentrierbohrung 11 versehen, die mittels einer Bohrschablone, die in der Horizontalen zu einem Referenzpunkt 12 der Bodenplatte 1 ausgerichtet wurde, gebohrt wurde. Beim Einbringen der Zentrierbohrung 11 wird diese mit einem Zapfensenker angespiegelt und es wird durch den Senkvorgang an der Oberfläche des Anschlußelementes 9, bei dem die Ausdrehung für die Ausgleichsscheiben 10 eingebracht wird, die Parallelität zur Referenzfläche 4 sichergestellt. Jeder Aufnahmeteller 7 ist an seiner Unterseite mit einem Zapfen 13 versehen, der paßgenau auf die Zentrierbohrung 11 abgestimmt ist und dessen Außendurchmesser auf den Innendurchmesser der Ausgleichsscheiben 10 abgestimmt ist. Ferner verfügt er über eine zentrische Gewindebohrung, die die Befestigungsschraube 6 für die Einbauplatte 5 aufnimmt.

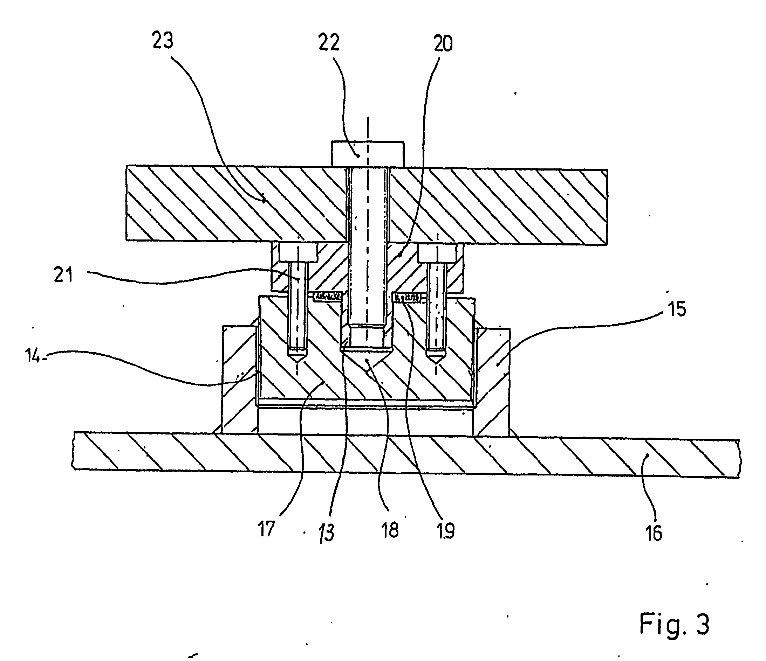

Bei der in Fig. 3 gezeigten alternativen Anordnung sind mit einem Innengewinde 14 versehene Rohrstutzen 15 an dafür vorgesehenen Befestigungsstellen mit einer Bodenplatte 16 verschweißt. In diese Rohrstutzen 15 sind zylindrische, mit einem passenden Außengewinde versehene Anschlußelemente 17 so weit eingeschraubt, daß sie die geforderte Einbauhöhe aufweisen. In dieser Einbauposition werden sie im Rohrstutzen 15 festgeschweißt. Auch im Fall dieses Ausführungsbeispiels ist jedes Anschlußelement 17 mit einer Zentrierbohrung 18 versehen, die wie bereits beschrieben eingebracht wurde. Ausgleichsscheiben 19 zwischen dem Anschlußelement 17 und einem an diesem gehalterten Aufnahmeteller 20, der analog zum Aufnahmeteller 7 aufgebaut ist, können wieder zur Einstellung der erforderlichen Einbauhöhe bei der Montage eingelegt werden können. An den so vorbereiteten Aufnahmetellern 20, die mittels Schrauben 21 mit dem zugeordneten Anschlußelement 17 verbunden sind, wird wieder mittels einer Schraube 22 eine Einbauplatte 23 befestigt.

In beiden Fällen können die Einbauplatten bei der Endmontage auch bei einer voraufgegangenen, durch mechanische Beanspruchungen hervorgerufenen Verformung des Gehäuses, in der Höhe und in ihrer parallelen Lage relativ zu der am Fahrzeugboden angeordneten Referenzfläche eingestellt werden, ohne daß die Platten, die Anschlußelemente oder die Verbindungselemente spanabhebend nachbearbeitet werden müssen.

## Patentansprüche

1. Vorrichtung für Panzerfahrzeuge zur justierbaren Befestigung von Einbauteilen (5, 23) an einer Bodenplatte des Fahrzeuges als Aufnahmeplatte (1, 16), über räumlich verteilt angeordnete Verbindungsstellen, wobei die Aufnahmeplatte (1, 16) mit Anschlußelementen (9, 17) versehen ist, an denen Verbindungselemente (7, 20) zur Aufnahme der Einbauteile (5, 23) in der Höhe justierbar gehaltert sind, wobei die Verbindungselemente (7, 20) jeweils über eine Zentrierbohrung (11,18) am zugeordneten Anschlußelement (9, 17) gehaltert sind und der Abstand zwischen der Verbindungselementen (7, 20) und den an diesen angeordneten Anschlußelementen (9, 17) über Ausgleichsscheiben (10, 19) justierbar ist, die zwischen diese Elemente (9, 7, 17, 20) einlegbar sind und daß die Aufnahernplatte (3, 16) mit einer Referenzfläche (4) versehen ist, zu der die Einbauteile (5, 23) paßgenau ausrichtbar sind sowie die Verbindungselemente (7, 20) mit zapfenförmigen Ansätzen (13) versehen sind, deren Außendurchmesser paßgenau auf den Innendurchmesser der Zentrierbohrungen (11, 18) abgestimmt ist.

2. Vorrichtung nach Anspruch 1, **dadurch gekennzeichnet, daß** die Anschlußelemente (9) an der Aufnahmeplatte (3) angeschweißt sind.

3. Vorrichtung nach Anspruch 1, **dadurch gekennzeichnet, daß** die Anschlußelemente (17) über eine an der Aufnahmeplatte (16) angeschweißte Halterung (15) auf dieser positionierbar sind.

## Claims

1. A device for armoured vehicles for adjustable attachment of interior components (5, 23) to a base plate of the vehicle as receiving plate (1, 16), via spatially disperse connecting points, wherein the receiving plate (1, 16) is provided with mounting elements (9, 17), on which connecting elements (7, 20) for receiving the interior components (5, 23) are mounted in height-adjustable manner, wherein the connecting elements (7, 20) are each mounted via a centring bore (11, 18) on the associated mounting element (9, 17) and the distance between the connecting elements (7, 20) and the mounting elements (9, 17) arranged thereon is adjustable via shims (10, 19), which may be inserted between these elements (9, 7, 17, 20) and in that the receiving plate (3, 16) is provided with a reference area (4), relative to which the interior components (5, 23) may be perfectly aligned, and the connecting elements (7, 20) are provided with peg-shaped extension pieces (13), whose external diameter is perfectly matched to the internal diameter of the centring bores (11, 18).

2. A device according to claim 1, **characterised in that** the mounting elements (9) are welded to the receiving plate (3).

3. A device according to claim 1, **characterised in that** the mounting elements (17) may be positioned on the receiving plate (16) via a holder (15) welded on said plate.

## Revendications

1. Dispositif pour véhicules blindés pour la fixation réglable d'éléments de montage (5, 23) sur un panneau de plancher du véhicule servant de plaque réceptrice (1, 16) par l'intermédiaire de points de fixation répartis dans t'espace, la plaque réceptrice (1, 16) étant munie d'éléments d'attache (9, 17) auxquels des éléments de fixation (7, 20) destinés à recevoir les éléments de montage (5, 23) sont fixés avec possibilité de réglage en hauteur, les éléments de fixation (7, 20) étant tenus chaque fois sur l'élément d'attache (9, 17) associé par l'intermédiaire d'un trou de centrage (11, 18) et la distance entre les éléments de fixation (7, 20) et les éléments d'attache (9, 17) associés à ceux-ci étant réglable au moyen de cales de compensation (10, 19) à placer entre lesdits éléments (9, 7, 17, 20), la plaque réceptrice (3, 16) étant pourvue d'une surface de référence (4) par rapport à laquelle les éléments de montage (5, 23) peuvent être positionnés avec précision et les éléments de fixation (7, 20) étant munis de saillies (13) en forme de tenon, dont le diamètre extérieur est adapté avec précision au diamètre intérieur des trous de centrage (11, 18).

2. Dispositif selon la revendication 1, **caractérisé par le fait que** les éléments d'attache (9) sont soudés à la plaque réceptrice (3).

3. Dispositif selon la revendication 1, **caractérisé par le fait que** les éléments d'attache (17) peuvent être positionnés sur la plaque réceptrice (16) par l'intermédiaire d'une fixation (15) soudée à celle-ci.
